# EUROPEAN PATENT SPECIFICATION

(11) **EP 3 233 429 B1**
(45) Date of publication and mention of the grant of the patent: **11.08.2021**
(21) Application number: 15823201.7
(22) Date of filing: 18.12.2015
(51) Int. Cl.: B29C 64/112, B29C 64/386, B33Y 10/00, B33Y 50/02

(54) **METHOD OF PRINTING OUT PRODUCT BY 3D-PRINTING SYSTEM**
VERFAHREN ZUM AUSDRUCKEN EINES PRODUKTS MIT EINEM 3D-DRUCKSYSTEM
PROCÉDÉ D'IMPRESSION D'UN PRODUIT PAR UN SYSTÈME D'IMPRESSION 3D

(30) Priority: 18.12.2014 CN 201410791175
(43) Date of publication of application: 25.10.2017
(73) Proprietor: Tyco Electronics (Shanghai) Co. Ltd., Shanghai (CN); TE Connectivity Corporation, Berwyn, PA 19312 (US)
(72) Inventor: DENG, Yingcong, Shanghai (CN); XIN, Liming, Shanghai (CN); LIU, Yun, Shanghai (CN); ZHANG, Dandan, Shanghai (CN); LU, Roberto Francisco-Yi, Berwyn, PA 19312 (US)
(74) Representative: Grünecker Patent- und Rechtsanwälte PartG mbB
(86) International application number: PCT/IB2015/059774
(87) International publication number: WO 2016/098067

(56) References cited:
- WO-A1-2012/171644
- US-A1- 2011 282 482
- J. Y. JENG AND W. P. YANG: "On-Line Layer Profile Dimensions Measurement of Model Maker Rapid Prototyping Using Vision Technology", THE INTERNATIONAL JOURNAL OF ADVANCED MANUFACTURING TECHNOLOGY, 1 January 2001 (2001-01-01), pages 125-133, XP002755854, london
- None

## Description

This application claims the benefit of Chinese Patent Application No. CN201410791175.9 filed on December 18, 2014 in the State Intellectual Property Office of China.

### BACKGROUND OF THE INVENTION

### Field of the Invention

The present invention relates to a method of printing out a product by a 3D-printing system in high efficiency.

### Description of the Related Art

In prior art, a 3D-printing system generally comprises a robot and a print head mounted on an end arm of the robot. The robot moves the print head along a predetermined path based on a preset program. Meanwhile, material, for forming a product to be printed, is ejected from the print head to a carrying table, so as to print out the product held on the carrying table.

Printing out the product by the 3D-printing system is different from machining out the product by a conventional machine. In the 3D-printing of the product, the product is formed by adding material. While, in the conventional machining of the product, the product is formed by removing material.

In the prior art, the robot for manipulating the print head is only movable in X-direction, Y-direction and Z-direction, which are perpendicular to each other, and the carrying table for carrying the material is stationary. Thereby, in the prior art, the product to be printed is firstly divided into a plurality of two-dimensional horizontal layers along the Z-direction; then, the robot manipulating the print head to move in a horizontal plane defined by the X-direction and the Y-direction, and print out the plurality of two-dimensional horizontal layers one by one. In this way, the whole product may be formed by stacking the plurality of two-dimensional horizontal layers in the Z-direction.

In the prior art, in order to ensure the accuracy of the printed product, generally, a print head with high resolution (or high precision) is used to perform the printing. Since the nozzle of the print head with high resolution has a very small diameter, the speed of ejecting the material from the nozzle is very slow. As a result, the printing speed is very slow, greatly decreasing the printing efficiency.

Furthermore, in the prior art, the print head is only movable relative to the carrying table in the X-direction, the Y-direction and the Z-direction. As a result, only the space position of the print head relative to the carrying table may be adjusted, but an angle of the print head relative to the carrying table cannot be adjusted. In this way, in 3D-printing in the prior art, the print head only can move along a two-dimensional plane or a two-dimensional curve, and cannot move along a three-dimensional plane or a three-dimensional curve. Thereby, its application is limited.

From US 2011/0282482 A1, a 3D-printing system with a coarse nozzle, a fine nozzle, a subtractive head and a 3D-scanner is known.

It is an object of the invention to provide a solution that allows a simpler printing.

This object is achieved when a gripper adapted to grip different sizes of print heads is provided.

### SUMMARY OF THE INVENTION

The present invention has been made to overcome or alleviate at least one aspect of the above mentioned disadvantages.

According to an object of the present invention, there is provided a method of printing out a product by a 3D-printing system, which increases the printing efficiency without decreasing the printing precision.

According to another object of the present invention, there is provided a method of printing out a product by a 3D-printing system, in which a print head is movable along a three-dimensional plane or a three-dimensional curve.

According to an aspect of the present invention, there is provided a method of printing out a product by a 3D-printing system, comprising steps of:
S100: performing a fast speed print with a first print head having a first resolution, so as to print out a substrate of the product;
S200: scanning the substrate printed out in the fast speed print and constructing an actual 3D-digital model of the substrate printed out in the fast speed print;
S300: comparing the actual 3D-digital model of the substrate printed out in the fast speed print with a pre-constructed ideal 3D-digital model of the product;
S400: based on a comparing result in the step S300, determining whether an error between the actual 3D-digital model of the substrate printed out in the fast speed print and the pre-constructed ideal 3D-digital model of the product is less than or equal to a predetermined value, if the determining result is yes, then returning to the step S100, if the determining result is no, then performing following step; and
S500: performing a low speed print of the product by a second print head having a second resolution higher than the first resolution, wherein a gripper, adapted to grip different sizes of print heads, is provided.

In an exemplary embodiment of the present invention, the above method further comprising steps of:
S600: scanning the substrate printed out in the low speed print and constructing an actual 3D-digital model of the substrate printed out in the low speed print;
S700: comparing the actual 3D-digital model of the substrate printed out in the low speed print with the pre-constructed ideal 3D-digital model of the product;
S800: based on a comparing result in the step S700, determining whether an error between the actual 3D-digital model of the substrate printed out in the low speed print and the pre-constructed ideal 3D-digital model of the product is less than or equal to the predetermined value, if the determining result is yes, then returning to the step S500, if the determining result is no, then performing following step; and
S900: performing an ultra low speed print of the product by a third print head having a third resolution higher than the second resolution.

In another exemplary embodiment of the present invention, a diameter of a nozzle of the first print head is larger than that of a nozzle of the second print head; and the diameter of the nozzle of the second print head is larger than that of a nozzle of the third print head.

In another exemplary embodiment of the present invention, a flow rate of material, for forming the product, ejected from the first print head is higher than that of the material, for forming the product, ejected from the second print head; and the flow rate of the material, for forming the product, ejected from the second print head is higher than that of the material, for forming the product, ejected from the third print head.

In another exemplary embodiment of the present invention, the substrate is carried on a carrying table, the carrying table is movable relative to the print head in a first direction, a second direction and a third direction, which are perpendicular to each other, and the carrying table is rotatable relative to the print head about axes in at least two of the first, second and third directions.

In another exemplary embodiment of the present invention, the substrate is scanned by a 3D-scanner located above the carrying table, and the carrying table is rotatable relative to the 3D-scanner about axes in at least two of the first, second and third directions.

In another exemplary embodiment of the present invention, the 3D-scanner is stationary or rotatable about axes in at least two of the first, second and third directions.

In another exemplary embodiment of the present invention, the carrying table is mounted on a first manipulating mechanism, and the first manipulating mechanism is configured to rotate the carrying table about axes in at least two of the first, second and third directions.

In another exemplary embodiment of the present invention, the print head is mounted on the second manipulating mechanism, and the second manipulating mechanism is configured to move the print head in the first direction, the second direction and the third direction.

In another exemplary embodiment of the present invention, the first manipulating mechanism and the second manipulating mechanism each comprises a multi-freedom robot.

In another exemplary embodiment of the present invention, the first manipulating mechanism and the second manipulating mechanism each comprises a planar articulated robot, a 6-axis robot, a cartesian robot, a serial robot, a parallel robot or a hybrid robot.

In another exemplary embodiment of the present invention, the first manipulating mechanism comprises a spherical mechanism.

In another exemplary embodiment of the present invention, the carrying table is mounted on the spherical mechanism, and the carrying table is rotatable about an axis in the first direction and an axis in the second direction.

In another exemplary embodiment of the present invention, the spherical mechanism comprises: a first rotation driver having an output shaft being rotatable about an axis in the first direction; a second rotation driver having an output shaft being rotatable about an axis in the second direction; a first 1/4 circular plate having one end connected to the output shaft of the first rotation driver; a second 1/4 circular plate, one end of which is pivotally connected to carrying table, and the other end of which is pivotally connected to the other end of the first 1/4 circular plate; and a third 1/4 circular plate, one end of which is connected to the output shaft of the second rotation driver, and the other end of which is pivotally connected to the carrying table, wherein a pivotal axis of a pivotal joint of the first 1/4 circular plate and the second circular plate, a pivotal axis of a pivotal joint of the second circular plate and the carrying table, a pivotal axis of a pivotal joint of the third circular plate and the carrying table, a rotation axis of the output shaft of the first rotation driver and a rotation axis of the output shaft of the second rotation driver converge at the same one point.

In another exemplary embodiment of the present invention, the same one point is a geometric center point of the carrying table.

In another exemplary embodiment of the present invention, the first rotation driver and the second rotation driver are fixed on a first installation plate and a second installation plate on a base, respectively.

In another exemplary embodiment of the present invention, the material, for forming the product, ejected from the print head is supplied from a material supplying device mounted on the second manipulating mechanism.

In another exemplary embodiment of the present invention, the material, for forming the product, ejected from the print head is supplied from a material supplying device far away from the second manipulating mechanism.

In another exemplary embodiment of the present invention, the gripper, adapted to grip different sizes of print heads, is provided on the second manipulating mechanism.

In another exemplary embodiment of the present invention, the actual 3D-digital model of the substrate and the ideal 3D-digital model of the product are constructed by CAD software.

In practical applications, accuracy requirements of different parts of a product are not the same, for example, generally, only exposed outside surface layer of the product is required to be printed in high resolution or ultra high resolution, and the inner part of the product is not required to be printed in high resolution. Sometimes, different products have different accuracy requirements, for the product with lower accuracy requirement, it is not necessary to use high precision printing.

In the above various methods of the present invention, at the beginning of the printing of the product, performing a fast speed print by a print head with low resolution and precision, in order to improve the printing speed and efficiency of the product. Thereafter, detecting whether the accuracy of the substrate of the product printed out in the fast speed print reaches a predetermined accuracy requirement, if the detecting result is no, then performing a low speed print by a print head with high resolution and precision. In this way, it may avoid using the print head with high resolution or ultra high resolution in the whole printing process of the product at low speed or ultra low speed. Thereby, it greatly improves the printing speed and efficiency of the product.

Furthermore, in some embodiments the present invention, the carrying table is movable relative to the print head in a first direction, a second direction and a third direction, which are perpendicular to each other, and the carrying table is rotatable relative to the print head about axes in at least two of the first, second and third directions. As a result, the print head not only may adjust a space position of the print head relative to the carrying table, but also may adjust an angle of the print head relative to the carrying table. Thereby, the print head may move relative to the carrying table along a three-dimensional plane or a three-dimensional curvc, and may print out a complex three-dimensional plane or a complex three-dimensional curve.

### BRIEF DESCRIPTION OF THE DRAWINGS

The above and other features of the present invention will become more apparent by describing in detail exemplary embodiments thereof with reference to the accompanying drawings, in which:

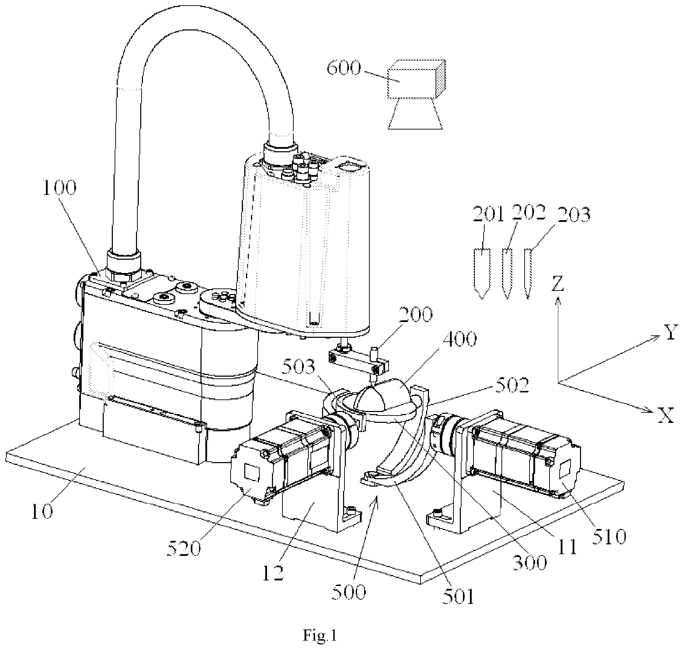

Fig.1 is an illustrative perspective view of a 3D-printing system according to an exemplary embodiment of the present invention.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a method of printing out a product by a 3D-printing system, comprising steps of:
S100: performing a fast speed print with a first print head having a first resolution, so as to print out a substrate of the product;
S200: scanning the substrate printed out in the fast speed print and constructing an actual 3D-digital model of the substrate printed out in the fast speed print;
S300: comparing the actual 3D-digital model of the substrate printed out in the fast speed print with a pre-constructed ideal 3D-digital model of the product;
S400: based on a comparing result in the step S300, determining whether an error between the actual 3D-digital model of the substrate printed out in the fast speed print and the pre-constructed ideal 3D-digital model of the product is less than or equal to a predetermined value, if the determining result is yes, then returning to the step S100, if the determining result is no, then performing following step; and
S500: performing a low speed print of the product by a second print head having a second resolution higher than the first resolution.

Fig.1 is an illustrative perspective view of a 3D-printing system according to an exemplary embodiment of the present invention.

In an exemplary embodiment of the present invention, there is disclosed a 3D-printing system. As shown in Fig.1, the 3D-printing system mainly comprises a print head 200, a carrying table 300, a first manipulating mechanism 500, a second manipulating mechanism 100, and a 3D-scanner 600.

As shown in Fig.1, a substrate 400 of a product printed out is carried on the carrying table 300. In an embodiment, the carrying table 300 is movable relative to the print head 200 in a first direction X, a second direction Y and a third direction Z, which are perpendicular to each other. The carrying table 300 is rotatable relative to the print head 200 about axes in at least two of the first, second and third directions X, Y, Z.

Referring to Fig.1, the 3D-scanner 600 is located above the carrying table 300, and the carrying table 300 is rotatable relative to the 3D-scanner 600 about axes in at least two of the first, second and third directions X, Y, Z.

In the illustrated embodiment, the 3D-scanner 600 is stationary. But the present invention is not limited to this, the 3D-scanner 600 may be rotatable about an axis in at least one of the first, second and third directions X, Y, Z or movable in at least one of the first, second and third directions X, Y, Z.

In an embodiment, as shown in Fig.1, the first manipulating mechanism (to be described hereafter) 500 and the second manipulating mechanism (or referred as a robot) 100 are fixed on a base 10. The print head 200 is mounted on an end arm of the second manipulating mechanism 100. The carrying table 300 is mounted on the first manipulating mechanism 500.

In an embodiment, the second manipulating mechanism 100 has at least three freedoms; for example, the second manipulating mechanism 100 may move the print head 200 in the first direction X, the second direction Y and the third direction Z, so as to print out the product by the print head as necessary on the carrying table 300.

In an embodiment, as shown in Fig.1, the first direction X and the second direction Y define a horizontal plane, and the third direction Z is a vertical direction perpendicular to the horizontal plane.

In an embodiment, the first manipulating mechanism 500 may have at least two freedoms; for example, the first manipulating mechanism 500 may rotate the carrying table 300 about at least two axes in at least two directions, so that an angle of the print head 200 relative to the carrying table 300 may be adjusted. In this way, by operating the first manipulating mechanism 500 and the second manipulating mechanism 100, the print head 200 may be moved relative to the carrying table 300 and/or the substrate 400 on the carrying table 300 along a 3D-surface or a 3D-curve.

In an embodiment, the second manipulating mechanism 100 may be a robot with at least three freedoms. For example, the second manipulating mechanism 100 may comprise a planar articulated robot, a 6-axis robot, a cartesian robot, a serial robot, a parallel robot or a hybrid robot.

In an embodiment, as shown in Fig.1, the first manipulating mechanism 500 comprises a spherical mechanism. The carrying table 300 is mounted on the spherical mechanism. The spherical mechanism is a three-dimensional rotation mechanism, all members of the spherical mechanism are rotatable about the same one point.

In an embodiment, as shown in Fig.1, the carrying table 300 is rotatable about an axis in the first direction X and an axis in the second direction Y.

Referring to Fig.1, in an embodiment, the spherical mechanism mainly comprises a first rotation driver 510, a second rotation driver 520, a first 1/4 circular plate 501, a second 1/4 circular plate 502, and a third 1/4 circular plate 503. As shown in Fig.1, an output shaft of the first rotation driver 510 is rotatable about an axis in the first direction X. An output shaft of the second rotation driver 520 is rotatable about an axis in the second direction Y. One end of the first 1/4 circular plate 501 is connected to the output shaft of the first rotation driver 510. One end of the second 1/4 circular plate 502 is pivotally connected to the carrying table 300, and the other end of the second 1/4 circular plate 502 is pivotally connected to the other end of the first 1/4 circular plate 501. One end of the third 1/4 circular plate 503 is connected to the output shaft of the second rotation driver 520, and the other end of the third 1/4 circular plate 503 is pivotally connected to the carrying table 300.

As shown in Fig.1, in an embodiment, a pivotal axis of a pivotal joint of the first 1/4 circular plate 501 and the second circular plate 502, a pivotal axis of a pivotal joint of the second circular plate 502 and the carrying table 300, a pivotal axis of a pivotal joint of the third circular plate 503 and the carrying table 300, a rotation axis of the output shaft of the first rotation driver 510 and a rotation axis of the output shaft of the second rotation driver 520 converge at the same one point. For example, the same one point is a geometric center point of the carrying table 300.

In the embodiment shown in Fig.1, the spherical mechanism has two freedoms. The spherical mechanism may rotate the carrying table 300 about an axis in the first direction X and an axis in the second direction Y, so as to change the posture of the carrying table 300. But the present invention is not limited to this, the spherical mechanism may have three freedoms, that is, the spherical mechanism may rotate the carrying table 300 about an axis in the first direction X, an axis in the second direction Y and an axis in the third direction Z, thereby obtaining more freedoms in a predetermined operation space.

In an embodiment, as shown in Fig.1, the first rotation driver 510 and the second rotation driver 520 are fixed on a first vertical installation plate 11 and a second vertical installation plate 12 which are mounted on a base 10, respectively.

As shown in Fig.1, in an embodiment, the first rotation driver 510 and the second rotation driver 520 each may comprise a motor.

Please be noted that the first manipulating mechanism 500 is not limited to the spherical mechanism shown in Fig.1. The first manipulating mechanism may comprise a robot with at least two freedoms.

In an embodiment, the material, for forming the product, ejected from the print head 200 is supplied from a material supplying device mounted on the second manipulating mechanism 100, as long as the second manipulating mechanism 100 may carry the material supplying device and the material contained in the material supplying device.

In another embodiment, the material, for forming the product, ejected from the print head 200 is supplied from a material supplying device far away from the second manipulating mechanism 100.

In the embodiment shown in Fig.1, the print head 200 is moved by the second manipulating mechanism 100, and the carrying table 300 is rotated by the first manipulating mechanism 500. Thereby, by operating the first manipulating mechanism 500 and the second manipulating mechanism 100, the print head 200 may be moved relative to the carrying table 300 along a 3D-surface or a 3D-curve.

Hereafter, it will describe in detail a method of printing out a product by a 3D-printing system according to an exemplary embodiment of the present invention with reference to Fig.1. The method may comprise steps of:
S100: performing a fast speed print with a first print head 201 having a first resolution, so as to print out a substrate 400 of the product;
S200: scanning the substrate 400 printed out in the fast speed print and constructing an actual 3D-digital model of the substrate 400 printed out in the fast speed print;
S300: comparing the actual 3D-digital model of the substrate 400 printed out in the fast speed print with a pre-constructed ideal 3D-digital model of the product;
S400: based on a comparing result in the step S300, determining whether an error between the actual 3D-digital model of the substrate 400 printed out in the fast speed print and the pre-constructed ideal 3D-digital model of the product is less than or equal to a predetermined value, if the determining result is yes, then returning to the step S100, if the determining result is no, then performing following step; and
S500: performing a low speed print of the product by a second print head 202 having a second resolution higher than the first resolution.

In an embodiment of the present invention, the above method may further comprise steps of:
S600: scanning the substrate 400 printed out in the low speed print and constructing an actual 3D-digital model of the substrate 400 printed out in the low speed print;
S700: comparing the actual 3D-digital model of the substrate 400 printed out in the low speed print with the pre-constructed ideal 3D-digital model of the product;
S800: based on a comparing result in the step S700, determining whether an error between the actual 3D-digital model of the substrate 400 printed out in the low speed print and the pre-constructed ideal 3D-digital model of the product is less than or equal to the predetermined value, if the determining result is yes, then returning to the step S500, if the determining result is no, then performing following step; and
S900: performing an ultra low speed print of the product by a third print head 203 having a third resolution higher than the second resolution.

In the above embodiment, among the first print head 201, the second print head 202 and the third print head 203, the first print head 201 has the lowest resolution, the lowest print precision and the quickest print speed (referred as fast speed print), the second print head 202 has a medium resolution, a medium print precision and a medium print speed (referred as low speed print), the third print head 203 has the highest resolution, the highest print precision and the lowest print speed (referred as ultra low speed print).

In the above embodiments, although it has described three kinds of print heads with different resolutions, the present invention is not limited to this. For example, if necessary, four or more kinds of print heads with different resolutions may be used. Different print heads are not only used to perform different prints with different resolutions, but also used to support different materials. In this case, the 3D-printing system may be used in a two injection molding process.

In the above embodiments, for a product with low accuracy, it may use only the first print head 201 with low resolution to complete the whole printing of the product in high speed. For a product with high accuracy, it may firstly use the first print head 201 with low resolution to print out a part of the product with low precision requirement in high speed; then it may use the second and the third print heads 202, 203 with high resolution to print out the other part of the product with high precision requirement. In this way, it greatly increases the printing efficiency of the product.

In the above embodiments, the resolution of the first print head 201 is lower than that of the second print head 202, and the resolution of the second print head 202 is lower than that of the third print head 203. Thereby, a diameter of a nozzle of the first print head 201 is larger than that of a nozzle of the second print head 202, and the diameter of the nozzle of the second print head 202 is larger than that of a nozzle of the third print head 203. Moreover, a flow rate of material, for forming the product, ejected from the first print head 201 is higher than that of the material, for forming the product, ejected from the second print head 202; and the flow rate of the material, for forming the product, ejected from the second print head 202 is higher than that of the material, for forming the product, ejected from the third print head 203.

As shown in Fig.1, in an embodiment, the first print head 201, the second print head 202 and the third print head 203 have different sizes. In order to easily replace different sizes of print heads, in an embodiment, a grippcr, adapted to grip different sizes of print heads 201, 202, 203, may be provided on the second manipulating mechanism 100.

In the above embodiments, the actual 3D-digital model of the substrate 400 and the ideal 3D-digital model of the product may be constructed by computer aided design and manufacturing software, for example, CAD software.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A method of printing out a product by a 3D-printing system, comprising steps of:
S100: performing a fast speed print with a first print head (200, 201) having a first resolution, so as to print out a substrate (400) of the product;
S200: scanning the substrate (400) printed out in the fast speed print and constructing an actual 3D-digital model of the substrate (400) printed out in the fast speed print;
S300: comparing the actual 3D-digital model of the substrate (400) printed out in the fast speed print with a pre-constructed ideal 3D-digital model of the product;
S400: based on a comparing result in the step S300, determining whether an error between the actual 3D-digital model of the substrate (400) printed out in the fast speed print and the pre-constructed ideal 3D-digital model of the product is less than or equal to a predetermined value, if the determining result is yes, then returning to the step S100, if the determining result is no, then performing following step; and
S500: performing a low speed print of the product by a second print head (200, 202) having a second resolution higher than the first resolution, **characterized in that** a gripper, adapted to grip different sizes of print heads (200, 201, 202, 203), is provided.

2. The method according to claim 1, further comprising steps of:
S600: scanning the substrate (400) printed out in the low speed print and constructing an actual 3D-digital model of the substrate (400) printed out in the low speed print;
S700: comparing the actual 3D-digital model of the substrate (400) printed out in the low speed print with the pre-constructed ideal 3D-digital model of the product;
S800: based on a comparing result in the step S700, determining whether an error between the actual 3D-digital model of the substrate (400) printed out in the low speed print and the pre-constructed ideal 3D-digital model of the product is less than or equal to the predetermined value, if the determining result is yes, then returning to the step S500, if the determining result is no, then performing following step; and
S900: performing an ultra low speed print of the product by a third print head (200, 203) having a third resolution higher than the second resolution.

3. The method according to claim 2,
wherein a diameter of a nozzle of the first print head (200, 201) is larger than that of a nozzle of the second print head (200, 202); and
wherein the diameter of the nozzle of the second print head (200, 202) is larger than that of a nozzle of the third print head (200, 203).

4. The method according to one of claims 1 to 3,
wherein the substrate (400) is carried on a carrying table (300),
wherein the carrying table (300) is movable relative to the print head (200) in a first direction (X), a second direction (Y) and a third direction (Z), which are perpendicular to each other, and
wherein the carrying table (300) is rotatable relative to the print head (200) about axes in at least two of the first, second and third directions (X, Y, Z).

5. The method according to claim 4,
wherein the carrying table (300) is mounted on a first manipulating mechanism (500), and
wherein the first manipulating mechanism (500) is configured to rotate the carrying table (300) about axes in at least two of the first, second and third directions (X, Y, Z) and/or
wherein the print head (200) is mounted on the second manipulating mechanism (100), and
wherein the second manipulating mechanism (100) is configured to move the print head (200) in the first direction (X), the second direction (Y) and the third direction (Z).

6. The method according to claim 5,
wherein the first manipulating mechanism (500) and the second manipulating mechanism (100) each comprises a planar articulated robot, a 6-axis robot, a cartesian robot, a serial robot, a parallel robot or a hybrid robot.

7. The method according to one of claims 5 or 6,
wherein the first manipulating mechanism (500) comprises a spherical mechanism.

8. The method according to claim 7,
wherein the carrying table (300) is mounted on the spherical mechanism, and
wherein the carrying table (300) is rotatable about an axis in the first direction (X) and an axis in the second direction (Y).

9. The method according to claim 8,
wherein the spherical mechanism comprises:
a first rotation driver (510) having an output shaft being rotatable about an axis in the first direction (X);
a second rotation driver (520) having an output shaft being rotatable about an axis in the second direction (Y);
a first 1/4 circular plate (501) having one end connected to the output shaft of the first rotation driver (510);
a second 1/4 circular plate (502) having one end pivotally connected to carrying table (300), and the other end pivotally connected to the other end of the first 1/4 circular plate (501); and
a third 1/4 circular plate (503) having one end connected to the output shaft of the second rotation driver (520), and the other end pivotally connected to the carrying table (300),
wherein a pivotal axis of a pivotal joint of the first 1/4 circular plate (501) and the second circular plate (502), a pivotal axis of a pivotal joint of the second circular plate (502) and the carrying table (300), a pivotal axis of a pivotal joint of the third circular plate (503) and the carrying table (300), a rotation axis of the output shaft of the first rotation driver (510) and a rotation axis of the output shaft of the second rotation driver (520) converge at the same one point.

10. The method according to claim 9,
wherein the same one point is acted as a geometric center point of the carrying table (300).

11. The method according to claim 9 or 10,
wherein the first rotation driver (510) and the second rotation driver (520) are fixed on a first installation plate (11) and a second installation plate (12) on a base (10), respectively.

12. The method according to one of claims 5 to 11,
wherein the material, for forming the product, ejected from the print head (200) is supplied from a material supplying device mounted on the second manipulating mechanism (100).

13. The method according to one of claims 5 to 11,
wherein the material, for forming the product, ejected from the print head (200) is supplied from a material supplying device far away from the second manipulating mechanism (100).

14. The method according to one of claims 5 to 13, wherein the gripper is provided on the second manipulating mechanism (100).

15. A 3D printing system adapted for the method of one of claims 1 to 14, comprising: a first print head (200,201), a 3D-scanner (600), a second print head (200,202) and a gripper.

## Patentansprüche

1. Verfahren zum Ausdrucken eines Erzeugnisses mit einem 3D-Drucksystem, das die folgenden Schritte umfasst:
S100: Durchführen eines Schnelldrucks mit einem ersten Druckkopf (200, 201), der eine erste Auflösung hat, um ein Substrat (400) des Erzeugnisses auszudrucken;
S200: Scannen des in dem Schnelldruck ausgedruckten Substrats (400) und Erstellen eines Ist-3D-Digitalmodells des in dem Schnelldruck ausgedruckten Substrats (400);
S300: Vergleichen des in dem Schnelldruck ausgedruckten Ist-3D-Digitalmodells des Substrats (400) mit einem vorkonstruierten idealen 3D-Digitalmodell des Erzeugnisses;
S400: Feststellen, ob eine Abweichung zwischen dem in dem Schnelldruck ausgedruckten Ist-3D-Digitalmodell des Substrats (400) und dem vorkonstruierten idealen 3D-Digitalmodell des Erzeugnisses unter oder auf einem vorgegebenen Wert liegt, auf Basis eines Ergebnisses des Vergleichens in Schritt S300 sowie anschließend Zurückkehren zu dem Schritt S100, wenn das Ergebnis des Feststellens "Ja" lautet und Durchführen des folgenden Schrittes, wenn das Ergebnis des Feststellens "Nein" lautet; sowie
S500: Durchführen eines Drucks des Erzeugnisses mit niedriger Geschwindigkeit mit einem zweiten Druckkopf (200, 202), der eine zweite Auflösung hat, die höher ist als die erste Auflösung, **dadurch gekennzeichnet, dass** ein Greifer vorhanden ist, der zum Greifen von Druccköpfen (200, 201, 202, 203) unterschiedlicher Größe eingerichtet ist.

2. Verfahren nach Anspruch 1, das des Weiteren folgende Schritte umfasst:
S600: Scannen des in dem Druck mit niedriger Geschwindigkeit ausgedruckten Substrats (400) und Erstellen eines Ist-3D-Digitalmodells des in dem Druck mit niedriger Geschwindigkeit ausgedruckten Substrats (400);
S700: Vergleichen des in dem Druck mit niedriger Geschwindigkeit ausgedruckten Ist-3D-Digitalmodells des Substrats (400) mit dem vorkonstruierten idealen 3D-Digitalmodell des Erzeugnisses;
S800: Feststellen, ob eine Abweichung zwischen dem in dem Druck mit niedriger Geschwindigkeit ausgedruckten Ist-3D-Digitalmodell des Substrats (400) und dem vorkonstruierten idealen 3D-Digitalmodell des Erzeugnisses unter oder auf einem vorgegebenen Wert liegt, auf Basis eines Ergebnisses des Vergleichens in Schritt S700, sowie anschließend Zurückkehren zu dem Schritt S500, wenn das Ergebnis des Feststellens "Ja" lautet und Durchführen des folgenden Schrittes, wenn das Ergebnis des Feststellens "Nein" lautet; und
S900: Durchführen eines Drucks mit extrem niedriger Geschwindigkeit (ultra low speed print) des Erzeugnisses mit einem dritten Druckkopf (200, 203), der eine dritte Auflösung hat, die höher ist als die zweite Auflösung.

3. Verfahren nach Anspruch 2,
wobei ein Durchmesser einer Düse des ersten Druckkopfes (200, 201) größer ist als der einer Düse des zweiten Druckkopfes (200, 202); und
der Durchmesser der Düse des zweiten Druckkopfes (200, 202) größer ist als der einer Düse des dritten Druckkopfes (200, 203).

4. Verfahren nach einem der Ansprüche 1 bis 3,
wobei das Substrat (400) von einem Tragetisch (300) getragen wird,
der Tragetisch (300) relativ zu dem Druckkopf (200) in einer ersten Richtung (X), einer zweiten Richtung (Y) und einer dritten Richtung (Z) bewegt werden kann, die senkrecht zueinander sind; und
der Tragetisch (300) relativ zu dem Druckkopf (200) um Achsen in wenigstens zwei von der ersten, der zweiten und der dritten Richtung (X, Y, Z) gedreht werden kann.

5. Verfahren nach Anspruch 4,
wobei der Tragetisch (300) an einem ersten Stellmechanismus (500) montiert ist, und
der erste Stellmechanismus (500) so ausgeführt ist, dass er den Tragetisch (300) um Achsen in wenigstens zwei von der ersten, der zweiten und der dritten Richtung (X, Y, Z) dreht und/oder
der Druckkopf (200) an dem zweiten Stellmechanismus (100) montiert ist, und
der zweite Stellmechanismus (100) so ausgeführt ist, dass er den Druckkopf (200) in der ersten Richtung (X), der zweiten Richtung (Y) und der dritten Richtung (Z) bewegt.

6. Verfahren nach Anspruch 5,
wobei der erste Stellmechanismus (500) und der zweite Stellmechanismus (100) jeweils einen planaren Gelenkarmroboter, einen Sechs-Achs-Roboter, einen kartesischen Roboter, einen seriellen Roboter, einen parallelen Roboter oder einen hybriden Roboter umfassen.

7. Verfahren nach einem der Ansprüche 5 oder 6,
wobei der erste Stellmechanismus (500) einen sphärischen Mechanismus umfasst.

8. Verfahren nach Anspruch 7,
wobei der Tragetisch (300) an dem sphärischen Mechanismus montiert ist, und
der Tragetisch (300) um eine Achse in der ersten Richtung (X) und eine Achse in der zweiten Richtung (Y) herum gedreht werden kann.

9. Verfahren nach Anspruch 8,
wobei der sphärische Mechanismus umfasst:
eine erste Dreh-Antriebseinrichtung (510) mit einer Ausgangswelle, die um eine Achse in der ersten Richtung (X) herum gedreht werden kann;
eine zweite Dreh-Antriebseinrichtung (520) mit einer Ausgangswelle, die um eine Achse in der zweiten Richtung (Y) herum gedreht werden kann;
eine erste Viertelkreisplatte (501), deren eines Ende mit der Ausgangswelle der ersten Dreh-Antriebseinrichtung (510) verbunden ist;
eine zweite Viertelkreisplatte (502), deren eines Ende schwenkbar mit dem Tragetisch (300) verbunden ist, und deren anderes Ende schwenkbar mit dem anderen Ende der ersten Viertelkreisplatte (501) verbunden ist; sowie
eine dritte Viertelkreisplatte (503), deren eines Ende mit der Ausgangswelle der zweiten Dreh-Antriebseinrichtung (520) verbunden ist und deren anderes Ende schwenkbar mit dem Tragetisch (300) verbunden ist,
wobei eine Schwenkachse einer Schwenkverbindung der ersten Viertelkreisplatte (501) und der zweiten Kreisplatte (502), eine Schwenkachse einer Schwenkverbindung der zweiten Kreisplatte (502) und des Tragetischs (300), eine Schwenkachse einer Schwenkverbindung der dritten Kreisplatte (503) und des Tragetischs (300), einer Drehachse der Ausgangswelle der ersten Dreh-Antriebseinrichtung (510) und einer Drehachse der Ausgangswelle der zweiten Dreh-Antriebseinrichtung (520) an dem gleichen einen Punkt zusammenlaufen.

10. Verfahren nach Anspruch 9,
wobei der gleiche eine Punkt einen geometrischen Mittelpunkt des Tragetischs (300) bildet.

11. Verfahren nach Anspruch 9 oder 10,
wobei die erste Dreh-Antriebseinrichtung (510) und die zweite Dreh-Antriebseinrichtung (520) an einer ersten Installationsplatte (11) bzw. einer zweiten Installationsplatte (12) auf einer Basis (10) befestigt sind.

12. Verfahren nach einem der Ansprüche 5 bis 11,
wobei das Material zum Ausbilden des Erzeugnisses, das von dem Druckkopf (200) ausgestoßen wird, von einer Material-Zuführvorrichtung zugeführt wird, die an dem zweiten Stellmechanismus (100) montiert ist.

13. Verfahren nach einem der Ansprüche 5 bis 11,
wobei das Material zum Ausbilden des Erzeugnisses, das von dem Druckkopf (200) ausgestoßen wird, von einer Material-Zuführvorrichtung zugeführt wird, die von dem zweiten Stellmechanismus (100) weit entfernt ist.

14. Verfahren nach einem der Ansprüche 5 bis 13, wobei der Greifer an dem zweiten Stellmechanismus (100) vorhanden ist.

15. 3D-Drucksystem, das für das Verfahren nach einem der Ansprüche 1 bis 14 eingerichtet ist und einen ersten Druckkopf (200, 201), einen 3D-Scanner (600), einen zweiten Druckkopf (200, 202) sowie einen Greifer umfasst.

## Revendications

1. Procédé d'impression d'un produit grâce à un système d'impression 3D, comprenant les étapes suivantes :
S100 : l'exécution d'une impression rapide avec une première tête d'impression (200, 200) présentant une première résolution, de sorte à imprimer un substrat (400) du produit,
S200 : le balayage du substrat (400) imprimé lors de l'impression rapide et la construction d'un modèle numérique 3D réel du substrat (400) imprimé lors de l'impression rapide,
S300 : la comparaison du modèle numérique 3D réel du substrat (400) imprimé lors de l'impression rapide avec un modèle numérique 3D idéal du produit construit à l'avance,
S400 : sur la base du résultat de la comparaison lors de l'étape S300, la détermination de ce que l'erreur entre le modèle numérique 3D réel du substrat (400) imprimé lors de l'impression rapide et le modèle numérique 3D idéal du produit construit à l'avance, est inférieure ou égale à une valeur prédéterminée, si le résultat de la détermination est oui alors retour à l'étape S100, et si le résultat de la détermination est non, alors exécution de l'étape suivante, et
S500 : l'exécution d'une impression lente du produit grâce à une deuxième tête d'impression (200, 202) présentant une deuxième résolution supérieure à la première résolution, **caractérisé en ce qu'**il est prévu une pince de préhension de différentes tailles de têtes d'impression (200, 201, 202, 203) .

2. Procédé selon la revendication 1, comprenant en outre les étapes suivantes :
S600 : le balayage du substrat (400) imprimé lors de l'impression lente et la construction du modèle numérique 3D réel du substrat (400) imprimé lors de l'impression lente,
S700 : la comparaison du modèle numérique 3D réel du substrat (400) imprimé lors de l'impression lente avec le modèle numérique 3D idéal construit à l'avance du produit,
S800 : sur la base du résultat de la comparaison lors de l'étape S700, la détermination de ce que l'erreur entre le modèle numérique 3D réel du substrat (400) imprimé lors de l'impression lente et le modèle numérique 3D idéal du produit construit à l'avance, est inférieure ou égale à la valeur prédéterminée, si le résultat de la détermination est oui alors retour à l'étape S500, et si le résultat de la détermination est non, alors exécution de l'étape suivante, et
S900 : l'exécution d'une impression ultra lente du produit grâce à une troisième tête d'impression (200, 203) présentant une troisième résolution supérieure à la deuxième résolution.

3. Procédé selon la revendication 2,
dans lequel le diamètre de la buse de la première tête d'impression (200, 200) est plus grand que celui de la buse de la deuxième tête impression (200, 202), et
dans lequel le diamètre de la buse de la deuxième tête d'impression (200, 202) est plus grand que celui de la buse de la troisième tête d'impression (200, 203).

4. Procédé selon l'une des revendications 1 à 3,
dans lequel le substrat (400) est transporté sur une table de transport (300),
dans lequel la table de transport (300) est mobile par rapport à la tête d'impression (200) dans une première direction (X), une deuxième direction (Y) et une troisième direction (Z) qui sont perpendiculaires l'une à l'autre, et
dans lequel la table de transport (300) peut tourner par rapport à la tête d'impression (200) autour d'un axe dans au moins deux des première, deuxième et troisième directions (X, Y, Z).

5. Procédé selon la revendication 4,
dans lequel la table de transport (300) est montée sur un premier mécanisme de manipulation (500), et
dans lequel le premier mécanisme de manipulation (500) est configuré pour faire tourner la table de transport (300) autour d'axes dans au moins deux des première, deuxième et troisième directions (X, Y, Z), et/ou
dans lequel la tête impression (200) est montée sur un second mécanisme de manipulation (100), et
dans lequel le second mécanisme de manipulation (100) est configuré pour déplacer la tête d'impression (200) dans la première direction (X), la deuxième direction (Y) et la troisième direction (Z).

6. Procédé selon la revendication 5,
dans lequel le premier mécanisme de manipulation (500) et le second mécanisme de manipulation (100) comprennent chacun un robot plan articulé, un robot sur 6 axes, un robot cartésien, un robot série, un robot parallèle ou un robot hybride.

7. Procédé selon l'une des revendications 5 ou 6,
dans lequel le premier mécanisme de manipulation (500) comprend un mécanisme sphérique.

8. Procédé selon la revendication 7,
dans lequel la table de transport (300) est montée sur le mécanisme sphérique, et
dans lequel la table de transport (300) peut tourner autour d'un axe dans la première direction (X) et d'un axe dans la deuxième direction (Y).

9. Procédé selon la revendication 8,
dans lequel le mécanisme sphérique comprend :
un premier dispositif d'entraînement en rotation (510) comportant un arbre de sortie pouvant tourner autour d'un axe dans la première direction (X),
un second dispositif d'entraînement en rotation (520) comportant un arbre de sortie pouvant tourner autour d'un axe dans la deuxième direction (Y),
un premier plateau 1/4 circulaire (501) dont une première extrémité est reliée à l'arbre de sortie du premier dispositif d'entraînement en rotation (510),
un deuxième plateau 1/4 circulaire (62) dont une première extrémité est reliée à la table de transport (300) pour pouvoir pivoter et dont l'autre extrémité est reliée à l'autre extrémité du premier plateau 1/4 circulaire (501) pour pouvoir pivoter, et
un troisième plateau 1/4 circulaire (503) dont une première extrémité est reliée à l'arbre de sortie du second dispositif d'entraînement en rotation (500) et dont l'autre extrémité est reliée à la table de transport (300) pour pouvoir pivoter,
dans lequel l'axe de pivotement du joint de pivotement du premier plateau 1/4 circulaire (501) et du deuxième plateau circulaire (502), l'axe de pivotement du joint de pivotement du deuxième plateau circulaire (502) et de la table de transport (300), l'axe de pivotement du joint de pivotement du troisième plateau circulaire (503) et de la table de transport (300), l'axe de pivotement du joint de pivotement du troisième plateau circulaire (503) et de la table de transport (300), l'axe de rotation de l'arbre de sortie du premier dispositif d'entraînement en rotation (510) et l'axe de rotation de l'arbre de sortie du second dispositif d'entraînement en rotation (520) convergent au même point.

10. Procédé selon la revendication 9,
dans lequel le même point unique agit en tant que point central géométrique de la table de transport (300).

11. Procédé selon la revendication 9 ou la revendication 10,
dans lequel le premier dispositif d'entraînement en rotation (510) et le second dispositif d'entraînement en rotation (520) sont respectivement fixés sur un premier plateau d'installation (10) et un second plateau d'installation (12) sur une base (10).

12. Procédé selon l'une des revendications 5 à 11,
dans lequel la matière destinée à former le produit, éjectée de la tête d'impression (200), est fournie à partir d'un dispositif d'alimentation en matière monté sur le second mécanisme de manipulation (100).

13. Procédé selon l'une des revendications 5 à 11,
dans lequel la matière destinée à former le produit, éjectée de la tête d'impression (200), est fournie à partir d'un dispositif d'alimentation en matière à distance du second mécanisme de manipulation (100).

14. Procédé selon l'une des revendications 5 à 13, dans lequel la pince est disposée sur le second mécanisme de manipulation (100).

15. Système d'impression 3D conçu pour le procédé conforme à l'une des revendications 1 à 14, comprenant une première tête d'impression (200, 201), un scanneur 3D (600), une deuxième tête d'impression (200, 202) et une pince.
